# EUROPÄISCHE PATENTSCHRIFT

(11) **EP 1 214 224 B1**
(45) Veröffentlichungstag und Bekanntmachung des Hinweises auf die Patenterteilung: **10.12.2003**
(21) Anmeldenummer: 00967716.2
(22) Anmeldetag: 20.09.2000
(51) Int. Cl.: B60R 1/00

(54) **KRAFTFAHRZEUG- SENSORANORDNUNG ZUR UMGEBUNGSERFASSUNG**
SENSOR DEVICE FOR A MOTOR VEHICLE USED FOR DETECTING ENVIRONMENTAL PARAMETERS
DISPOSITIF DE CAPTEURS AUTOMOBILES POUR DETECTION DE L'ENVIRONNEMENT

(30) Priorität: 23.09.1999 DE 19945588
(43) Veröffentlichungstag der Anmeldung: 19.06.2002
(73) Patentinhaber: Bayerische Motoren Werke Aktiengesellschaft, 80809 München (DE)
(72) Erfinder: HAHN, Wolfgang, 85247 Schwabhausen (DE)
(86) Internationale Anmeldenummer: EP0009183
(87) Internationale Veröffentlichungsnummer: WO01021438

(56) Entgegenhaltungen:
- EP-A- 0 454 516
- FR-A- 2 687 000
- US-A- 5 001 558
- PATENT ABSTRACTS OF JAPAN vol. 1998, no. 14, 31. Dezember 1998 (1998-12-31) & JP 10 255019 A (TOYOTA MOTOR CORP), 25. September 1998 (1998-09-25)
- PATENT ABSTRACTS OF JAPAN vol. 1998, no. 11, 30. September 1998 (1998-09-30) & JP 10 162287 A (NEC CORP), 19. Juni 1998 (1998-06-19)
- PATENT ABSTRACTS OF JAPAN vol. 2000, no. 09, 13. Oktober 2000 (2000-10-13) & JP 2000 184368 A (MATSUSHITA ELECTRIC IND CO LTD), 30. Juni 2000 (2000-06-30)

## Beschreibung

Die Erfindung betrifft eine Sensoranordnung für ein Kraftfahrzeug zur Umgebungserfassung mit zumindest zwei Kamerasystemen.

Ein solches, gattungsgemäßes Sensorsystem kann beispielsweise zur Fahrerassistenz, also zur Unterstützung eines Bedieners eines Fahrzeugs eingesetzt werden. Es liefert Umgebungsinformationen und kann im Bereich der Fahrspurverfolgung, der Warnung bei einer Fahrspurabweichung oder im Bereich der automatischen Fahrzeugführung dienen.

Bei solchen Sensorsystemen ist es bereits bekannt, sogenannte CCD-Kameras (CCD=charged coupled device) einzusetzen. Allerdings ist zu berücksichtigen, daß die Funktionalität von Fahrassistenzsystemen eingeschränkt ist, wenn bereits der Sensor Beschränkungen bei der Erfassung der Umwelt unterworfen ist. Bei CCD-Kameras ist es bekannt, daß sie besonders in Dunkelheit und bei Blendung durch eine externe Lichtquelle eine eingeschränkte Funktionalität besitzen. Eine überproportionale Einschränkung ist dabei bei Blendungen während der Dunkelheit zu berücksichtigen, und zwar insbesondere dann, wenn die CCD-Kamera auf das umweltbedingte Beleuchtungsniveau eingestellt ist. Im Begegnungsfall mit einem anderen, mit Licht fahrenden Fahrzeug wird die Bildinformation durch die entgegenkommende Blendquellen sogar weitgehend zerstört.

Bekannt ist ferner auch die Verwendung von Infrarot-Kameras in solchen Sensoranordnungen (vgl. Fachzeitschrift: CAR AND DRIVER, Oktober 1998). Infrarot-Kameras nehmen ein Wärmebild der Fahrumgebung auf. In dem Wärmebild basieren alle Konturen und Objekte auf thermischen Kontrasten. Aus dem Wärmebild lassen sich jedoch nicht immer die für die Fahraufgabe bzw. für die Reaktion eines Fahrerassistenzsystems wichtigen Informationen gewinnen.

In der EP 0 454 516 A1 ist ein Hindemiserkennungssystem mit zwei Videokameras beschrieben, die Bilder im sichtbar und im Infrarot-Bereich generieren. Zur Erzeugung von Bildern im Infrarot-Bereich wird beispielsweise eine CCD Technologie benutzt. Mit einer ähnlichen Videokamera die das gesamte Spektrum erfassen kann wird ein Differenzsignal erzeugt. Dieses Differenzsignal oder Differenzbild bezieht sich auf den Sichtbereich, der von den Kameras abgedeckt wird und basiert auf dem Kontrast eines Objektes in diesem Sichtbereich. Auch in der JP-10 255019 wird eine Vorrichtung mit einer CCD-Kamera beschrieben, die ein sichtbares Bild aus dem Bereich vor einem Fahrzeug erzeugt. Überdies wird ein Infrarotbild von einer zusätzlichen Infrarotkamera erzeugt. Basierend auf der Temperaturinformation wird eine Schwelle für beleuchtete Teile generiert, und aufgrund dieser Schwelle kann eine verbesserte Fahrzeugerkennung erfolgen.

Aufgabe der vorliegenden Erfindung ist es, eine eingangs genannte Sensoranordnung derart weiterzubilden, daß eine Umgebungserfassung im wesentlichen ohne Einschränkung der Funktionalität möglich ist.

Diese Aufgabe wird durch die in Anspruch 1 genannten Merkmale gelöst.

Ein wesentlicher Gedanke der Erfindung liegt darin, zumindest zwei Kamerasysteme mit jeweils unterschiedlichen Spektralarbeitsbereichen zu verwenden.

Dabei sind die verschiedenen Kamerasysteme mit verschiedenen Brennweiten ausgestattet. Beispielsweise übernimmt eine Infrarot-Kamera die Umgebungserfassung im Fernbereich, da sie gleichermaßen tag- und nachttauglich sowie blendfrei ist. Blendfreiheit heißt in diesem Zusammenhang, daß die einzelnen Pixel durch die Scheinwerfer entgegenkommender Fahrzeuge nicht übersteuert werden. Die Bildinformation bleibt somit erhalten, auch bei völliger Umgebungsdunkelheit. Der Nahbereich wird von der CCD-Kamera erfaßt. Sie ist insbesondere so justiert, daß sie in einem Bereich operiert, der bei eingeschalteter Fahrzeugbeleuchtung von den Frontscheinwerfern erleuchtet wird. Diese Maßnahme verringert aufgrund des höheren Beleuchtungsniveaus die Blendempflindlichkeit der CCD-Kamera.

Gemäß einer bevorzugten Ausführungsform umfaßt die Sensoranordnung eine CCD-Kamera (charged coupled device) und eine Kamera, die im Infrarotbereich arbeitet. Die Infrarot-Kamera stellt beispielsweise eine sinnvolle Ergänzung der hier visuellen Sensorik (CCD) jenseits ihrer Detektionsgrenzen im weiteren Vorfeld der Fahrumgebung dar.

Bei der Verwendung von Kamerasystemen mit unterschiedlicher Brennweite und den damit verbundenen Abbildungsmaßstäben kann die Fahrumgebung insgesamt besser in Nah- und Fernbereich erfaßt werden.

Ein weiterer Vorteil der Verwendung von zwei Kamerasystemen mit unterschiedlichen Spektralarbeitsbereichen besteht darin, mittels differenzieller Kontrastauswertung die Extinktion der Atmosphäre in beiden Spektralbereichen zu bestimmen. Durch Vergleich der Extinktionen kann auf Nebel oder Dunst geschlossen werden, was sich unterschiedlich auf die Sensorreichweite auswirkt. In Verbindung mit einem in einem Fahrzeug hinterlegten Sichtweitenmodell kann ferner aus den erfaßten Extiktionen eine Fahrersichtweite bestimmt werden. Diese Informationen wiederum können dem Fahrer zur Verfügung gestellt werden, oder es können Regelparameter im Fahrzeug in Abhängigkeit von der ermittelten Fahrersichtweite eingestellt werden.

Diese und weitere vorteilhafte Ausführungsformen sind in den Unteransprüchen definiert.

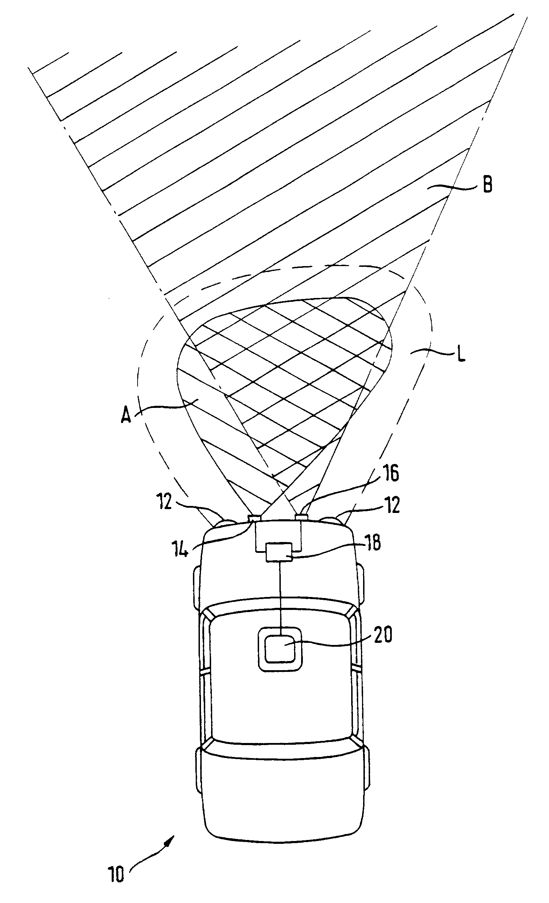

Die Erfindung wird nachfolgend und mit Bezugnahme auf die einzige Zeichnung näher erläutert. Die Figur der einzigen Zeichnung zeigt eine schematische Skizze eines Fahrzeugs in Draufsicht mit frontseitig angeordnetem erfindungsgemäßen Sensorsystem.

Ein Fahrzeug 10 besitzt zwei Frontscheinwerfer 12, die bei Betrieb einen bestimmten Lichtbereich L ausleuchten.

Zwischen den beiden Frontscheinwerfern 12 sind zwei Kameras angeordnet und zwar vorliegend eine Infrarot-Kamera 16 und eine CCD-Kamera (CCD = charged coupled device) 14. Beide Kameras 16 und 14 sind in Fahrrichtung ausgerichtet. Die CCD-Kamera 14 ist derart ausgebildet und eingestellt, daß sie im wesentlichen einen Bereich A erfaßt, der bei eingeschalteten Frontscheinwerfern ausgeleuchtet wird und daher dem Bereich L entspricht.

Die Infrarot-Kamera 16 hingegen erfaßt die Umgebung insbesondere im Fernbereich B.

Beide Kameras 16, 14 sind mit einer Steuer- und Auswerteeinrichtung 18 verbunden. Die Steuer- und Auswerteeinrichtung 18 gibt ein Signal an ein Display 20 ab, das im Fahrzeuginnenraum im Blickbereich des Fahrers angeordnet ist. Das Display 20 informiert den Fahrer über die Umgebungssituation in den erfaßten Bereichen.

Zusätzlich, jedoch nicht in der Figur dargestellt, kann die Steuer- und Auswerteeinrichtung 18 ihre Informationen auch noch an andere Einheiten im Fahrzeug abgeben, beispielsweise an Systeme, die mit einer automatischen Fahrzeugführung zu tun haben.

Die Steuer- und Auswerteeinrichtung 18 gibt zum einen die von den Kameras 16 und 14 übermittelten Informationen direkt an den Fahrer weiter. Überdies führt sie auch eine differentielle Kontrastauswertung durch. Dadurch können die Extinktionen der Atmosphäre in den beiden Spektralbereichen ermittelt werden. Wird in der Steuer- und Auswerteeinrichtung 18 auch ein Sichtweitenmodell hinterlegt, so kann über die ermittelten Extinktionen und durch eine differentielle Kontrastauswertung auch auf die Fahrersichtweite geschlossen werden.

Diese Sichtweite und/oder Extinktionen lassen sich dann zur Anpassung von Regelparametern oder zur Geschwindigkeitsempfehlung an den Fahrer nutzen.

Zur Bestimmung der Extinktion im sichtbaren Spektralbereich kann jedoch auch ein anderes System wie ein Lidarsystem verwendet werden.

## Patentansprüche

1. Sensoranordnung für ein Kraftfahrzeug zur Umgebungserfassung mit zumindest zwei Kamerasystemen (14, 16), die jeweils in unterschiedlichen Spektralbereichen arbeiten,
**dadurch gekennzeichnet,**
**daß** jedes Kamerasystem (14, 16) auf eine unterschiedliche Brennweite eingestellt ist.

2. Sensoranordnung nach Anspruch 1,
**dadurch gekennzeichnet,**
**daß** ein Kamerasystem (16) im Infrarotbereich arbeitet.

3. Sensoranordnung nach einem der Ansprüche 1 oder 2,
**dadurch gekennzeichnet,**
**daß** ein Kamerasystem (14) eine CCD-Kamera umfaßt.

4. Sensoranordnung nach Anspruch 3
**dadurch gekennzeichnet,**
**daß** die CCD-Kamera (14) zur Erfassung des Nahbereichs eingesetzt ist.

5. Sensoranordnung nach Anspruch 4
**dadurch gekennzeichnet,**
**daß** die CCD-Kamera (14) derart eingestellt ist, dass sie den Bereich eines Scheinwerferkegels eines mit Licht fahrenden Fahrzeugs erfaßt.

6. Sensoranordnung nach einem der vorhergehenden Ansprüche,
**dadurch gekennzeichnet,**
**daß** eine mit allen Kamerasystemen verbundene Auswerteeinrichtung (18) vorgesehen ist.

7. Sensoranordnung nach Anspruch 6,
**dadurch gekennzeichnet,**
**daß** die Auswerteeinrichtung (18) zur differenziellen Kontrastauswertung ausgebildet ist.

8. Sensoranordnung nach Anspruch 6 oder 7,
**dadurch gekennzeichnet,**
**daß** eine Speichereinrichtung vorgesehen ist, in der ein Sichtweitenmodell abgespeichert ist, und daß eine Einrichtung vorgesehen ist, mittels der aus den Informationen aus der Auswerteeinrichtung (18), insbesondere der differenziellen Kontrastauswertung, auf die Sichtweite schließbar ist.

## Claims

1. A sensor arrangement for a motor vehicle for environmental detection comprising at least two camera systems (14, 16) each operating in different spectral ranges, **characterised in that** each camera system (14, 16) is adjusted to a different focal length.

2. A sensor arrangement according to claim 1, **characterised in that** a camera system (16) operates in the infrared range.

3. A sensor arrangement according to either of claims 1 or 2, **characterised in that** a camera system (14) comprises a CCD camera.

4. A sensor arrangement according to claim 3, **characterised in that** the CCD camera (14) is used to detect the close range.

5. A sensor arrangement according to claim 4, **characterised in that** the CCD camera (14) is adjusted such that it detects the range of a headlight cone of a vehicle driving with its lights on.

6. A sensor arrangement according to any one of the preceding claims, **characterised in that** an evaluation apparatus (18) connected to all camera systems is provided.

7. A sensor arrangement according to claim 6, **characterised in that** the evaluation apparatus (18) is designed for differential contrast evaluation.

8. A sensor arrangement according to claim 6 or 7, **characterised in that** a memory apparatus is provided, in which a visibility model is stored, and **in that** an apparatus is provided by means of which the visibility can be inferred from the information from the evaluation apparatus (18), especially the contrast evaluation.

## Revendications

1. Dispositif de capteurs pour un véhicule automobile pour la détection de l'environnement, comprenant au moins deux systèmes de caméra (14, 16) travaillant chacun dans des régions spectrales différentes,
**caractérisé en ce que**
chaque système de caméra (14, 16) est réglé sur une distance focale différente.

2. Dispositif capteur selon la revendication 1,
**caractérisé en ce qu'**
un système de caméra (16) travaille dans la zone infrarouge.

3. Dispositif capteur selon l'une des revendications 1 ou 2,
**caractérisé en ce qu'**
un système de caméra (14) comprend une caméra CCD.

4. Dispositif capteur selon la revendication 3,
**caractérisé en ce que**
la caméra CCD (14) est utilisée pour détecter la zone immédiate.

5. Dispositif capteur selon la revendication 4,
**caractérisée en ce que**
la caméra CCD (14) est installée de sorte qu'elle saisit le domaine d'un cône de projecteur d'un véhicule roulant avec les feux allumés.

6. Dispositif capteur selon l'une quelconque des revendications précédentes,
**caractérisée par**
une installation d'exploitation (18) reliée à tous les systèmes de caméra.

7. Dispositif capteur selon la revendication 6,
**caractérisée en ce que**
l'installation d'exploitation (18) peut effectuer une exploitation différentielle de contrastes.

8. Dispositif capteur selon la revendication 6 ou 7,
**caractérisée en ce qu'**
une unité de mémoire est prévue pour enregistrer un modèle de portées de vues, et une installation permet de collimater sur la portée de vue à partir des informations de l'installation d'exploitation (18), en particulier de l'exploitation de contrastes différentielle.
